(19) Europäisches Patentamt
European Patent Office
Office européen des brevets

(11) **EP 1 257 849 B1**

(12) **FASCICULE DE BREVET EUROPEEN**

(45) Date de publication et mention
de la délivrance du brevet:
**07.01.2009 Bulletin 2009/02**

(21) Numéro de dépôt: **01907746.0**

(22) Date de dépôt: **09.02.2001**

(51) Int Cl.:
***G01V 1/16*** *(2006.01)*

(86) Numéro de dépôt international:
**PCT/FR2001/000380**

(87) Numéro de publication internationale:
**WO 2001/059482 (16.08.2001 Gazette 2001/33)**

(54) **DISPOSITIF DE RECEPTION D'ONDES SISMIQUES ET METHODE POUR LE COUPLER AVEC UN MILIEU SOLIDE**

VORRICHTUNG ZUM EMPFANG SEISMISCHER WELLEN UND VERFAHREN ZU DEREN KOPPLUNG MIT EINEM FESTEN MEDIUM

DEVICE FOR RECEIVING SEISMIC WAVES AND METHOD FOR COUPLING IT WITH A SOLID ENVIRONMENT

(84) Etats contractants désignés:
**AT BE CH CY DE DK ES FI FR GB GR IE IT LI LU MC NL PT SE TR**
Etats d'extension désignés:
**RO**

(30) Priorité: **14.02.2000 FR 0001793**

(43) Date de publication de la demande:
**20.11.2002 Bulletin 2002/47**

(73) Titulaires:
• **GAZ DE FRANCE**
**75840 Paris Cedex 17 (FR)**
• **COMPAGNIE GENERALE DE GEOPHYSIQUE**
**91341 Massy Cedex (FR)**

(72) Inventeur: **MEUNIER, Julien**
**75013 Paris (FR)**

(74) Mandataire: **Andrieux, Benoît**
**Institut Francais du Pétrole**
**1 et 4 avenue de Bois Préau**
**92852 Rueil-Malmaison cedex (FR)**

(56) Documents cités:
**EP-A- 0 937 997**       **DE-C- 19 518 461**
**FR-A- 2 738 642**       **US-A- 4 134 097**
**US-A- 4 534 020**

## Description

La présente invention concerne un dispositif de réception d'ondes sismiques comprenant un hydrophone et/ou un géophone et une méthode pour le(s) coupler avec un milieu solide tel que le sous-sol.

Le dispositif selon l'invention trouve des applications notamment dans des opérations d'exploration ou de surveillance sismique d'une formation souterraine.

## Etat de la technique

Il est connu de surveiller les variations d'état à long terme d'un réservoir en cours de production qu'il s'agisse d'un gisement d'hydrocarbures ou d'un réservoir destiné au stockage de gaz ou de substances diverses, etc, au moyen d'un système sismique comportant un source sismique impulsionnelle ou un vibrateur sismique pour émettre des ondes élastiques dans le sol et un dispositif de réception comportant des capteurs sismiques disposés en surface ou dans des puits et couplés avec les formations à surveiller, pour capter les ondes renvoyées par les discontinuités et les enregistrer, dans le but de former des sismogrammes représentatifs. A intervalles de temps définis, on réalise des investigations sismiques de façon à déterminer par comparaison des modifications intervenues dans le réservoir, résultant de son exploitation.

Comme capteurs sismiques, on utilise généralement des géophones couplés avec la formation, en surface ou dans des puits. Les géophones peuvent être descendus dans les puits suspendus à un câble ou attachés à un tubing et plaqués fermement contre la paroi du puits par des patins articulés ou des ressorts. Ils peuvent aussi être descendus dans un puits fixés à l'extérieur d'un casing et noyés dans le ciment injecté dans l'espace annulaire entre lui et la paroi du puits. Les géophones peuvent encore être installés dans un puits foré à cet effet et rempli de ciment.

Il est connu également d'utiliser des hydrophones qui sont couplés avec les formations par l'intermédiaire des fluides remplissant les puits.

Différents systèmes de surveillance sismique à long terme sont décrits par exemple dans les brevets EP 591 037 (US 5 461 594), FR 2 593 292 (US 4 775 009), FR 2 728 973 (US 5 724 311), FR 2 775 349 ou US 4 534 020.

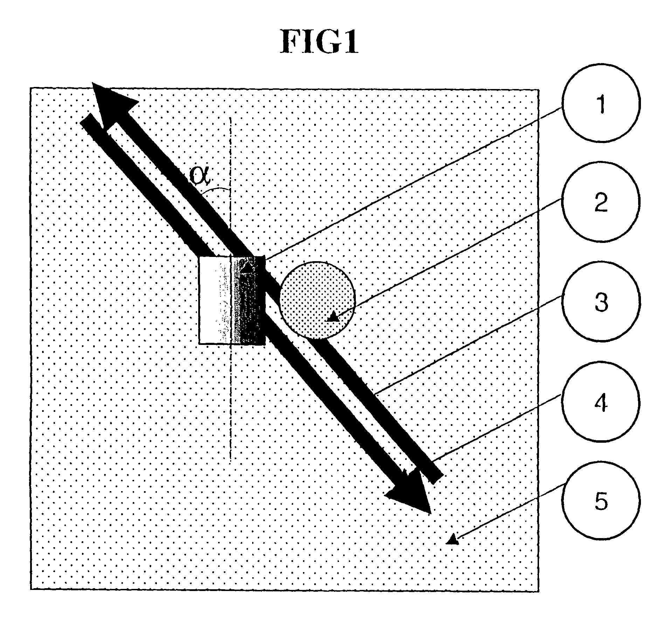

L'utilisation combinée d'un géophone 1 et d'un hydrophone 2 en un même point présente des avantages importants quand il s'agit de séparer des ondes sismiques 3, 4 se propageant le long d'une même direction mais en sens inverse les unes des autres. (Fig.1). En effet le géophone 1 mesure la projection sur l'axe du géophone, du vecteur vitesse des particules du milieu exploré sous l'effet des ondes, et l'hydrophone 2 la pression. Dans un milieu homogène 5 où la vitesse de propagation est constante, ces deux grandeurs sont liées par la relation :

$$P = \varepsilon \, z \, V/\cos \alpha$$

où:

P est la pression,

z, l'impédance sismique du milieu,

$\varepsilon$, un coefficient égal à +1 ou -1, selon le sens de propagation de l'onde,

V, la vitesse de la particule sur un axe parallèle à sa direction de propagation, et $\alpha$, l'angle entre l'axe du géophone et la direction de propagation.

C'est le cas dans les opérations classiques de Prospection Sismique Verticale (PSV), où les capteurs installés le long d'un puits détectent à la fois des ondes descendantes et des ondes montantes, et il est connu qu'en utilisant des couples de géophones et des hydrophones positionnés à distance les uns des autres le long d'un puits, on peut séparer simplement les ondes des deux types par une combinaison linéaire des mesures de vitesse et pression et:

$$D_{esc} = P - zV/\cos \alpha$$

$$M_{ont} = P + zV/\cos \alpha$$

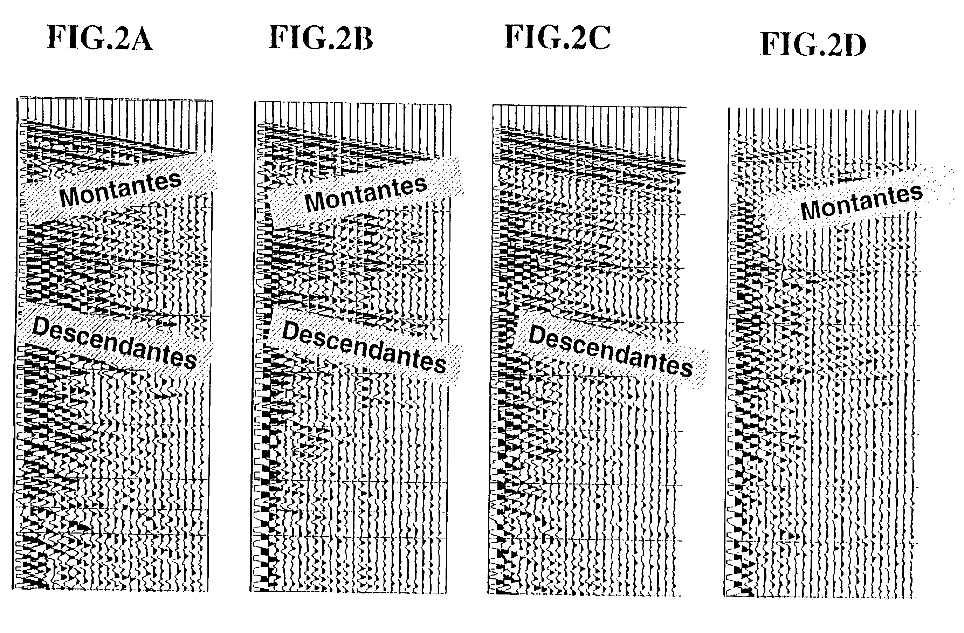

Les sismogrammes des Fig.2A, 2B correspondent à des données enregistrées dans un puits vertical respectivement par un géophone (données de vitesse V) et un hydrophone (données de pression P). Les sismogrammes des Fig.2C, 2D correspondent respectivement à la différence (P-V) et à la somme (P+V).

Alors que les données V et P comportent toutes deux des ondes montantes (M) et des ondes descendantes (D), leur différence ne comporte plus que des ondes descendantes (Fig.2C) et leur somme, des ondes montantes (Fig.2D).

La mise en pratique de cette discrimination des ondes par utilisation combinée d'hydrophones et de géophones se heurte à la difficulté de couplage des hydrophones au milieu.

Dans le cas de mesures en puits, le couplage des hydrophones avec les formations s'obtient par l'intermédiaire de la boue remplissant le puits, ce qui se révèle très gênant car il est exposé directement aux ondes dites de boue dont l'amplitude est le plus souvent considérablement supérieure à celle des ondes se propageant dans le milieu et que l'on cherche à observer.

## Le dispositif et la méthode selon l'invention

Le dispositif et la méthode de couplage selon l'invention permettent de coupler très efficacement des hydrophones et/ou des géophones avec un milieu tel qu'une formation souterraine par exemple, en évitant notamment les effets parasites liés dans les applications à la sismique de puits, à leur immersion directe dans de la boue.

Le dispositif de réception d'ondes sismiques comprend au moins un hydrophone, une enveloppe close à paroi souple remplie de liquide destinée à être couplée étroitement avec le milieu sensiblement par toute sa surface, dans lequel l'hydrophone est immergé, l'enveloppe étant fermée à une extrémité par un bouchon étanche pourvu d'une traversée étanche pour un câble de liaison de l'hydrophone avec un moyen d'acquisition de signaux.

Le dispositif de réception peut également comporter au moins un géophone que l'on couple avec le milieu au voisinage de l'enveloppe close contenant l'hydrophone, et que l'on connecte au moyen d'acquisition de signaux.

Le géophone et/ou l'hydrophone dans son enveloppe close peuvent être par exemple couplés étroitement avec le milieu par un matériau durcissable tel que du ciment interposé entre eux et une cavité ménagée dans le milieu.

La méthode selon l'invention permet de coupler un dispositif de réception d'ondes sismiques comprenant au moins un hydrophone avec un milieu solide tel que le sous-sol, dans lequel on a formé une cavité permettant son enfouissement dans le milieu. On immerge l'hydrophone dans une enveloppe close à paroi souple remplie d'un liquide, qui est fermée à une extrémité par un bouchon étanche pourvu d'une traversée étanche pour un câble de liaison de l'hydrophone avec un appareil d'acquisition de signaux, et l'on couple sensiblement toute la paroi souple de l'enveloppe avec le milieu par injection dans la cavité autour de l'enveloppe d'un matériau durcissable tel que du ciment.

On peut également coupler avec le milieu, par le même matériau durcissable, au moins un géophone disposé au voisinage de l'enveloppe contenant l'hydrophone.

On dispose par exemple le dispositif de réception dans un espace intermédiaire entre un puits et un tube descendu dans le puits et on le couple avec le milieu par injection du matériau dans au moins une partie de cet espace.

**Présentation des figures**

D'autres caractéristiques et avantages de la méthode et du dispositif selon l'invention, apparaîtront à la lecture de la description ci-après d'un exemple non limitatif de réalisation, en se référant aux dessins annexés où :

- la Fig.1 illustre schématiquement les trajets suivis par des ondes élastiques se propageant dans une formation souterraine et reçues par des couplés avec cette formation ;

- les Fig.2A-2D montrent des exemples de sismogrammes formés à partir de signaux reçus respectivement par des capteurs de vitesse ou géophones (Fig.2A), par des capteurs de pression ou hydrophones (Fig.2B), par soustraction de signaux de vitesse et de pression (Fig.2C) et par sommation de ces mêmes signaux (Fig.2D) ; et

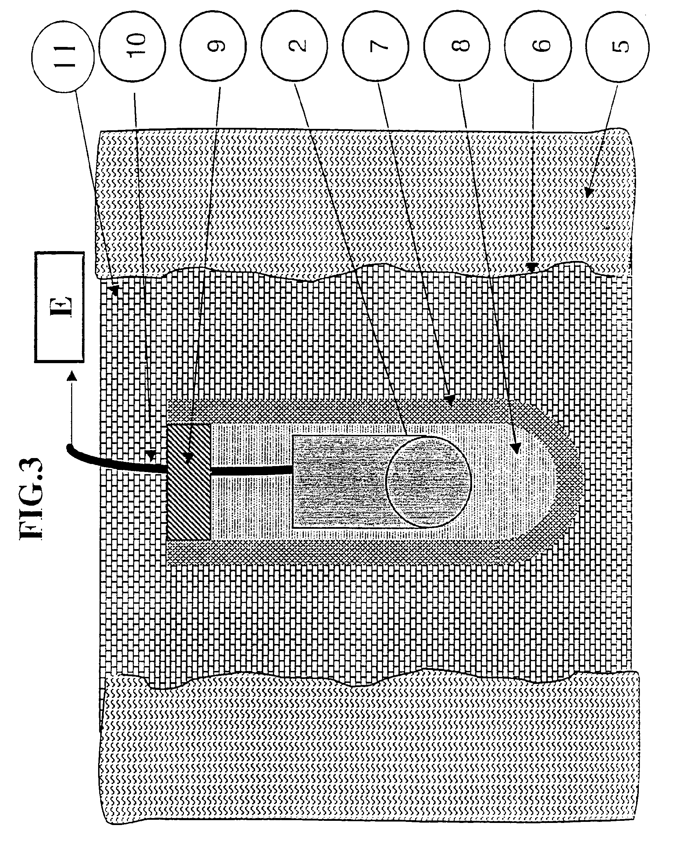

- la Fig.3 montre un exemple de couplage d'un hydrophone avec le milieu.

**Description détaillée**

La méthode de couplage utilisée ici pour coupler un ou plusieurs hydrophones 2 d'un dispositif de réception sismique avec un milieu solide 5 tel que le sous-sol, consiste essentiellement à immerger l'hydrophone 2 dans une enveloppe close à paroi souple 7 remplie entièrement de liquide 8 que l'on couple étroitement avec le milieu. Cette enveloppe ou poche 7 comporte une ouverture par laquelle on introduit l'hydrophone 2 et le liquide de remplissage 8. Un bouchon étanche 9 tel qu'un presse-étoupe par exemple, isole l'intérieur de l'enveloppe 7. Le bouchon 9 est pourvu d'une traversée 6 étanche au liquide pour un câble électrique 10 de liaison du ou des hydrophones à un appareil E d'acquisition de signaux extérieur, disposé en surface par exemple.

Le dispositif de réception peut être couplé avec le milieu 5 en comblant l'espace 6 où l'on a placé l'enveloppe 7. De préférence, on couple l'enveloppe 7 avec le milieu 5 en coulant autour d'elle un matériau solide 11 qui peut être soit du remblai soit un matériau rapporté durcissable tel que du ciment par exemple. La poche 7 doit être suffisamment petite pour pouvoir être introduite dans l'espace prévu pour elle et suffisamment grande pour que la partie active de l'hydrophone soit entièrement au contact du liquide.

De préférence, on associe à l'hydrophone 2 dans son enveloppe 7, un géophone 1 que l'on connecte également à l'appareil d'acquisition E et on les couple avec le milieu par l'intermédiaire du même matériau de couplage 11.

Les sismogrammes des Fig.2A à 2D sont obtenus à l'aide d'un tel dispositif comprenant une telle association d'un géophone et d'un hydrophone.

L'espace 6 où le dispositif est placé, peut être un trou ou puits destiné uniquement pour l'installation de capteurs ou bien éventuellement un espace annulaire autour d'un tube descendu dans le puits (un tube de cuvelage par exemple) et servant à l'exploitation d'un gisement ou réservoir souterrain (opérations de transfert de fluides entre la surface et le fond).

L'enfouissement de l'enveloppe dans le sol par le matériau de remplissage et notamment par le biais de ciment, permet d'obtenir un couplage étroit de l'hydrophone et/ ou du géophone avec la formation sans exposer directement l'hydrophone aux puissantes ondes de tube parcourant les fluides dans les puits. Le dispositif permet d'enfouir les récepteurs à distance de la surface et ainsi de les rendre pratiquement insensibles aux bruits de surface.

## Revendications

1. Dispositif de réception d'ondes sismiques émanant d'un milieu solide (5) tel que le sous-sol, comprenant au moins un hydrophone (2) dans une cavité (6) du milieu et couplé avec lui, **caractérisé en ce qu'**il comporte une enveloppe close à paroi souple (7) destinée à être couplée étroitement avec le milieu sensiblement par toute sa surface, cette enveloppe étant remplie de liquide (8) dans lequel l'hydrophone (2) est immergé, et étant fermée à une extrémité par un bouchon étanche (9) pourvu d'une traversée étanche pour un câble (10) de liaison de l'hydrophone avec un moyen d'acquisition de signaux (E).

2. Dispositif de réception selon la revendication 1, **caractérisé en ce qu'**il comporte un matériau durcissable (11) tel que du ciment, par injection duquel l'enveloppe close (7) contenant l'hydrophone (2) est couplée étroitement avec le milieu.

3. Dispositif de réception selon la revendication 1, **caractérisé en ce qu'**il comporte au moins un géophone (1) destiné à être couplé avec le milieu au voisinage de l'enveloppe close (7) contenant l'hydrophone (2), et destiné à être connecté au moyen d'acquisition de signaux (E).

4. Dispositif de réception selon la revendication 3, **caractérisé en ce qu'**il comporte un matériau durcissable (11) tel que du ciment, par injection duquel le géophone (1) et l'enveloppe close (7) contenant l'hydrophone (2) sont couplés étroitement avec le milieu.

5. Méthode pour coupler un dispositif de réception d'ondes sismiques comprenant au moins un hydrophone avec un milieu solide (5) tel que le sous-sol, dans lequel on a formé une cavité permettant son enfouissement dans le milieu, **caractérisée en ce que** l'on immerge l'hydrophone (1) dans une enveloppe close à paroi souple (7) remplie d'un liquide (8), fermée à une extrémité par un bouchon étanche (9) pourvu d'une traversée étanche pour un câble (10) de liaison de l'hydrophone avec un appareil d'acquisition de signaux (E), et l'on couple sensiblement toute la paroi souple de l'enveloppe (7) avec le milieu par injection dans la cavité autour de l'enveloppe d'un matériau durcissable tel que du ciment.

6. Méthode selon la revendication 5, **caractérisée en ce** l'on couple avec le milieu par le même matériau durcissable, au moins un géophone (1) disposé au voisinage de l'enveloppe (7) contenant l'hydrophone (2).

7. Méthode selon la revendication 5 ou 6, **caractérisée en ce que** l'on place le dispositif de réception dans un espace intermédiaire entre un puits et un tube descendu dans le puits et on le couple avec le milieu par injection du matériau dans au moins une partie de cet espace.

## Claims

1. Receiving device for seismic waves emanating from a solid medium (5) such as the subsoil, comprising at least one hydrophone (2) in a cavity (6) of the medium and coupled therewith, **characterised in that** it includes a flexible-wall closed cover (7) intended to be coupled closely to the medium substantially by its entire surface, this cover being filled with liquid (8) in which the hydrophone (2) is immersed, and being closed at one end by an impervious stopper (9) provided with an impervious duct for a cable (10) for linking the hydrophone to a signal acquisition means (E).

2. Receiving device according to Claim 1, **characterised in that** it includes a hardenable material (11) such as cement, by injection of which the closed cover (7) containing the hydrophone (2) is coupled closely to the medium.

3. Receiving device according to Claim 1, **characterised in that** it includes at least one geophone (1) intended to be coupled to the medium in the vicinity of the closed cover (7) containing the hydrophone (2), and intended to be connected to the signal acquisition means (E).

4. Receiving device according to Claim 3, **characterised in that** it includes a hardenable material (11) such as cement, by injection of which the geophone (1) and the closed cover (7) containing the hydrophone (2) are coupled closely to the medium.

5. Method for coupling a receiving device for seismic waves comprising at least one hydrophone to a solid medium (5) such as the subsoil, in which there is formed a cavity permitting its burial in the medium, **characterised in that** the hydrophone (1) is immersed in a flexible-wall closed cover (7) filled with a liquid (8), closed at one end by an impervious stopper (9) provided with an impervious duct for a cable (10) for linking the hydrophone to a signal acquisition device (E), and substantially all of the flexible wall of the cover (7) is coupled to the medium by injection of a hardenable material such as cement into the cavity around the cover.

6. Method according to Claim 5, **characterised in that** at least one geophone (1) arranged in the vicinity of the cover (7) containing the hydrophone (2) is coupled to the medium by the same hardenable material.

7. Method according to Claim 5 or 6, **characterised in that** the receiving device is placed in an intermediate space between a bore well and a tube sunk into the bore well and it is coupled to the medium by injection of the material into at least one part of this space.

**Patentansprüche**

1. Vorrichtung zum Empfang von seismischen Wellen, die von einem festen Material (5), wie dem Untergrund, ausgehen, die mindestens ein Hydrophon (2) in einem Hohlraum (6) des Materials umfasst und daran gekoppelt ist, **dadurch gekennzeichnet, dass** sie eine geschlossene Hülle mit einer biegsamen Wand (7) umfasst, die dazu bestimmt ist, im Wesentlichen durch ihre gesamte Fläche eng an das Material gekoppelt zu sein, wobei diese Hülle mit Flüssigkeit (B) gefüllt ist, in die das Hydrophon (2) eingetaucht ist, und an einem Ende durch einen dichten Stöpsel (9) geschlossen ist, der mit einer dichten Durchführung für ein Kabel (10) zur Verbindung des Hydrophons mit einem Mittel zur Erfassung von Signalen (E) versehen ist.

2. Empfangsvorrichtung nach Anspruch 1, **dadurch gekennzeichnet, dass** sie einen härtbaren Stoff (11), wie Zement, umfasst, durch dessen Einspritzung die geschlossene Hülle (7), die das Hydrophon (2) enthält, eng an das Material gekoppelt ist.

3. Empfangsvorrichtung nach Anspruch 1, **dadurch gekennzeichnet, dass** sie mindestens ein Geophon (1) umfasst, das dazu bestimmt ist, an das Material in der Nähe der geschlossenen Hülle (7), die das Hydrophon (2) enthält, gekoppelt zu sein und dazu bestimmt ist, mit dem Mittel zur Erfassung von Signalen (E) verbunden zu sein.

4. Empfangsvorrichtung nach Anspruch 3, **dadurch gekennzeichnet, dass** sie einen härtbaren Stoff (11), wie Zement, umfasst, durch dessen Einspritzung das Geophon (1) und die geschlossene Hülle (7), die das Hydrophon (2) enthält, eng an das Material gekoppelt sind.

5. Verfahren zum Koppeln einer Vorrichtung zum Empfang von seismischen Wellen, die mindestens ein Hydrophon umfasst, mit einem festen Material (5), wie dem Untergrund, in dem ein Hohlraum gebildet wurde, der ihre Einbringung in das Material ermöglicht, **dadurch gekennzeichnet, dass** das Hydrophon (1) in eine geschlossene Hülle mit biegsamer Wand (7) eingetaucht wird, die mit einer Flüssigkeit (8) gefüllt ist und die an einem Ende durch einen dichten Stöpsel (9) verschlossen ist, der mit einer dichten Durchführung für ein Kabel (10) zur Verbindung des Hydrophons mit einer Einrichtung zur Erfassung von Signalen (E) versehen ist, und im Wesentlichen die gesamte biegsame Wand der Hülle (7) durch Einspritzung eines härtbaren Stoffs, wie Zement, in den Hohlraum um die Hülle an das Material gekoppelt wird.

6. Verfahren nach Anspruch 5, **dadurch gekennzeichnet, dass** mindestens ein Geophon (1), das in der Nähe der Hülle (7) angeordnet ist, die das Hydrophon (2) enthält, mit dem gleichen härtbaren Stoff an das Material gekoppelt wird.

7. Verfahren nach Anspruch 5 oder 6, **dadurch gekennzeichnet, dass** die Vorrichtung zum Empfang in einem Zwischenraum zwischen einem Schacht und einem in den Schacht eingeführten Rohr angeordnet wird und sie durch Einspritzen des Stoffes in zumindest einen Abschnitt dieses Raumes an das Material gekoppelt wird.

FIG1

EP 1 257 849 B1

FIG.2A    FIG.2B    FIG.2C    FIG.2D

FIG.3

**EP 1 257 849 B1**

## RÉFÉRENCES CITÉES DANS LA DESCRIPTION

**Documents brevets cités dans la description**

- EP 591037 A
- US 5461594 A
- FR 2593292
- US 4775009 A

- FR 2728973
- US 5724311 A
- FR 2775349
- US 4534020 A